(19) **Europäisches Patentamt**
**European Patent Office**
**Office européen des brevets**

(11) **EP 4 726 612 A1**

(12) **EUROPEAN PATENT APPLICATION**

(43) Date of publication:
**15.04.2026  Bulletin 2026/16**

(21) Application number: **24205669.5**

(22) Date of filing: **09.10.2024**

(51) International Patent Classification (IPC):
*G06N 10/60 $^{(2022.01)}$     G06N 10/20 $^{(2022.01)}$*

(52) Cooperative Patent Classification (CPC):
**G06N 10/60;** G06N 10/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Fraunhofer-Gesellschaft zur Förderung
der angewandten Forschung e.V.
80686 München (DE)**

• **Rheinische Friedrich-Wilhelms-Universität
Bonn,
Körperschaft des öffentlichen Rechts
53113 Bonn (DE)**

(72) Inventors:
• **Griebel, Michael
Sankt Augustin (DE)**
• **Hamaekers, Jan
Sankt Augustin (DE)**

(74) Representative: **Pfenning, Meinig & Partner mbB
Patent- und Rechtsanwälte
Theresienhöhe 11a
80339 München (DE)**

(54) **QUANTUM COMPUTING METHOD AND DEVICE WITH SPARSE ENCODING**

(57)    The invention relates to a method and a device for performing a quantum computation, which includes a sparse encoding, wherein, for a number $N$ of particles in a physical system, and a size of a basis set, $M \in \mathbb{N} \cup \{\infty\}$, a set $B$ of $M$ single-particle functions $f_j$, with each function $f_j$ being a function from a one particle space to $\mathbb{C}$, defined as $B := \{f_1, f_2, \ldots, f_M\}$, and two monotonously increasing mappings $k$ and $r$ are defined, which assign a real positive number to each single-particle function $f_j$, wherein, for a parameter $K \in \mathbb{R}^+$ and a parameter $R \in \mathbb{R}^+$, a reduced tensor product basis set $S_{K,R}^{T,p_q,p_r}$ of the single-particle functions $f_j$ is selected as

$$S_{K,R}^{T,p_q,p_r} := \{\otimes_{i=1}^{N} f_{j_i} : \frac{1}{1-T} \left( \sum_{i=1}^{N} k(f_{j_i})^{p_q} \right)^{-T/p_q} \prod_{i=1}^{N} k(f_{j_i}) \leq K \ and \ \left( \sum_{i=1}^{N} r(f_{j_i})^{p_r} \right)^{\frac{1}{p_r}} \leq$$
$$R \ where \ \{j_1, \ldots, j_N\} \subseteq \{1, \ldots, M\}\},$$

wherein $T \in \mathbb{R}$, with $T < 1$, defines a reduction in a number of basis functions, $p_q$ and $p_r$ are parameters of selected $p_q$-norms and $p_r$-norms and $K$ and $R$ are selected based on an error behavior of the reduced tensor product basis set $S_{K,R}^{T,p_q,p_r}$. In particular, this definition includes also special cases, where the mapping $k$ is constant and equal to one and hence can be neglected. Considering as an example the calculation of the FeMoco cofactor of the Nitrogenase enzyme, which involves $N = 54$ electrons, the number of sufficient qubits can be reduced from 1080 to 256 for plane wave like single-particle basis functions and from 378 to 157 for Gaussian like single-particle basis functions.

EP 4 726 612 A1

**Description**

The present invention is in the field of quantum computing.

The potential advantage of a quantum algorithm over algorithms on classical computers is essentially limited by the number and quality of available qubits. The aim of the invention is to provide a compact and efficient representation of state functions of many-body Hamiltonian operators, which reduces the number of qubits required for a meaningful simulation of such Hamiltonian operators on quantum computers.

Current quantum computing hardware devices provide in the range of 100 to 1000 physical qubits (which obey quite large errors). A first quantum computing hardware device has been introduced that claims to provide 4 logical qubits (or at least qubits that obey sufficiently small errors). It is expected that around 100 logical qubits will be needed to achieve a quantum computing hardware advantage over classical computing hardware.

State functions of many-body Hamiltonian operators are functions of Hilbert spaces with certain symmetries. In the case of bosons (e.g. photons), the state functions are symmetric with interchange of the particles and bosons have an integer spin. In the case of fermions (e.g. electrons), state functions are antisymmetric with two particles interchanged and fermions have spin ½ or spin -½. To perform a quantum calculation, the many-body states are approximated in finite-dimensional Hilbert spaces and encoded using a finite number of qubits. This applies to the algorithms for quantum hardware from the current Noisy Intermediate Scale Qubits (NISQ) Era (e.g.: Hybrid Variational Quantum Eigensolver (VQE)) and algorithms for future Fault-Tolerant Qubits (FTQ) quantum hardware such as Quantum Phase Estimation (QPE) and Hamilton Simulation methods.

The computational resources required for the calculation of many-particle systems are usually measured in terms of the number of particles in the system, $N$, and the size of the basis set, i.e. the number of spin orbitals to be considered, $M$. In the case of fermions and the formulation using the second quantization, Jordan-Wigner (JW) and Bravyi-Kitaev (BK) mapping schemes are used, where the number of qubits is linearly dependent on the number of one-particle basis (or orbitals) considered in the approach. Here, the number of qubits required is $M$, because the fermionic Fock states are mapped directly to an $M$-qubit quantum register. This means that in the case of $M$ single-particle spin orbitals for the approximate representation of the N-electron wave function, these states can be mapped to $n = O(M)$ qubits. Furthermore, techniques exist to utilize any known symmetries of the system to reduce the number of qubits used. Typically, the number of qubits is reduced by one for each symmetry. These representations also contain many-body states that do not represent N particles. If only many-particle states that correspond to exactly $N$ particles are to be represented, so-called efficient or compact encodings (or mappings) can also be used by means of binary encoding. For a fixed number of spin-up and spin-down electrons $N_u$ and $N_d$ with $N = N_u + N_d$, the states can be mapped to $n = \log_2\left(\binom{M}{N_u}\binom{M}{N_d}\right)$ qubits (cf. Chamaki, D., Metcalf, M., & de Jong, W. A. (2022). Compact Molecular Simulation on Quantum Computers via Combinatorial Mapping and Variational State Preparation. arXiv preprint arXiv:2205.11742). Also in the first quantization, the Slater determinants involved in the case of M one-particle spin orbitals can be optimally encoded with $n = \log_2\left(\binom{M}{N}\right)$ qubits (cf. Babbush, R., Berry, D. W., Sanders, Y. R., Kivlichan, I. D., Scherer, A., Wei, A. Y., ... & Aspuru-Guzik, A. (2017). Exponentially more precise quantum simulation of fermions in the configuration interaction representation. Quantum Science and Technology, 3(1), 015006). Binary coding using qubits has also been used in the case of techniques with special subsets of Slater determinants, where eigenvalues and functions of the Hamiltonian are already solved on classical hardware using classical algorithms to determine these subsets (Yoffe, D., Natan, A., & Makmal, A. (2023). A qubit-efficient variational selected configuration-interaction method. arXiv preprint arXiv:2302.06691).

Documents EP 4 290 421 A1, US 2024/0071576 A1, US2023206100A1, US2023016119A1, WO2021203202A1, US2023385681A1 and US11735291B2 show methods for quantum computing.

As mentioned at the outset, the aim of the invention is to provide a compact and efficient representation of state functions of many-body Hamiltonian operators, which reduces the number of qubits required for a meaningful simulation of such Hamiltonian operators on quantum computers. This is achieved by way of a method or a device for performing a quantum computation according to the independent claims. Advantageous embodiments can be found in the dependent claims and in the following description.

Accordingly, a method for performing a quantum computation is presented. The method includes a sparse encoding, wherein, for a number $N$ of particles in a physical system, and a size of a basis set, $M \in \mathbb{N} \cup \{\infty\}$, which may be seen as corresponding to a number of orbitals to be considered, a set $B$ of $M$ single-particle functions $f_j$, with each function $f_j$ being a function from a one particle space to $\mathbb{C}$, is defined as $B := \{f_1, f_2, ..., f_M\}$, and a monotonously increasing mapping $k$ is defined, which assigns a real positive number to each single-particle function $f_j$. For a parameter $K \in \mathbb{R}_+$, a reduced tensor product basis set $S_K^{T,p}$ of the single-particle functions $f_j$ is selected as

$$S_K^{T,p} := \{\otimes_{i=1}^N f_{j_i} : \frac{1}{1-T}\left(\sum_{i=1}^N k\left(f_{j_i}\right)^p\right)^{-T/p} \left(\prod_{i=1}^N k\left(f_{j_i}\right)\right) \le K \ and \ \{j_1, ..., j_N\} \subseteq \{1, ..., M\}\},$$

wherein $T \in \mathbb{R}$, with $T < 1$, defines a reduction in a number of basis functions, $p \in \mathbb{N} \cup \{\infty\}$ is a parameter of a selected $p$-norm, and $K$ is selected based on an error behavior of the reduced tensor product basis set $S_K^{T,p}$. Here, $\otimes$ denotes a product, such as a tensor product, an antisymmetric product, a wedge product, or the like.

A device for performing a quantum computation is also presented. The device comprises an encoder for sparse encoding, the encoder being configured to produce a reduced tensor product basis set $S_K^{T,p}$ for a physical system. Therein, for a number $N$ of particles in the physical system, and a size of a basis set, $M \in \mathbb{N} \cup \{\infty\}$, which may be seen as corresponding to a number of orbitals to be considered, a set $B$ of $M$ single-particle functions $f_j$ is defined as $B := \{f_1, f_2, ..., f_M\}$, and a monotonously increasing mapping k is defined, which assigns a real positive number to each single-particle function $f_j$. The device is configured to select a reduced tensor product basis set $S_K^{T,p}$ of the single-particle functions $f_j$ as

$$S_K^{T,p} := \{\otimes_{i=1}^N f_{j_i} : \left(\sum_{i=1}^N k\left(f_{j_i}\right)^p\right)^{-T/p} \left(\prod_{i=1}^N k\left(f_{j_i}\right)\right)/ (1 - T) \le K \ and \ \{j_1, ..., j_N\} \subseteq \{1, ..., M\}\},$$

wherein $T \in \mathbb{R}$, with $T < 1$, defines a reduction in a number of basis functions, and $p \in \mathbb{N} \cup \{\infty\}$ is a parameter of a selected $p$-norm. The device is configured to select $K$ based on an error behavior of the reduced tensor product basis set $S_K^{T,p}$. For example, for fermions, this may include partial antisymmetric tensor products, and for bosons, this may include partial symmetric tensor products.

Within the device or method, for example, p may be chosen as $p = 1$ which represents the 1-norm. It may for instance also be chosen as $p = 2$ for the Euclidian norm, or as $p = \infty$ for the maximum-norm.

In addition to the above-mentioned device and method, the present application also relates to a further device and method for performing a quantum computation, which is based on two discretization parameters, K and R, instead of just one discretization parameter K, as shown above. Specifically, a method for performing a quantum computation which includes a sparse encoding, wherein, for a number $N$ of particles in a physical system, and a size of a basis set, $M$, which may be seen as corresponding to a number of orbitals considered, a set $B$ of $M$ single-particle functions $f_j$ is defined as $B := \{f_1, f_2, ..., f_M\}$, and two monotonously increasing mappings $k$ and $r$ are defined, which assign a real positive number to each single-particle function $f_j$,

wherein, for a parameter $K \in \mathbb{R}_+$ and a parameter $R \in \mathbb{R}_+$, a reduced tensor product basis set $S_{K,R}^{T,p_q,p_r}$ of the single-particle functions $f_j$ is selected as

$$S_{K,R}^{T,p_q,p_r} := \{\otimes_{i=1}^N f_{j_i} : \frac{1}{1-T}\left(\sum_{i=1}^N k\left(f_{j_i}\right)^{p_q}\right)^{-T/p_q} \prod_{i=1}^N k\left(f_{j_i}\right) \le K \ and \ \left(\sum_{i=1}^N r\left(f_{j_i}\right)^{p_r}\right)^{\frac{1}{p_r}} \le$$
$$R \ where \ \{j_1, ..., j_N\} \subseteq \{1, ..., M\}\},$$

wherein $T \in \mathbb{R}$, with $T < 1$, defines a reduction of a number of basis functions, $p_q \in \mathbb{N} \cup \{\infty\}$ and $p_r \in \mathbb{N} \cup \{\infty\}$ are parameters of selected $p_q$- and $p_r$-norms, and $K$ and $R$ are selected based on an error behavior of the reduced tensor product basis set $S_{K,R}^{T,p_q,p_r}$.

Furthermore, a device for performing a quantum computation, comprises an encoder for sparse encoding, the encoder being configured to produce a reduced tensor product basis set, $S_{K,R}^{T,p_q,p_R}$, for a physical system, wherein, for a number $N$ of particles in a physical system, and a size of a basis set, $M \in \mathbb{N}$, which may be seen as corresponding to a number of orbitals considered, a set $B$ of $M$ single-particle functions $f_j$ is defined as $B := \{f_1, f_2, ..., f_M\}$, and two monotonously increasing mappings $k$ and r are defined, which assign a real positive number to each single-particle function $f_j$,

the device is configured to select the reduced tensor product basis set $S_{K,R}^{T,p_q,p_r}$ of the single-particle functions $f_j$ as

$$S_{K,R}^{T,p_q,p_r} := \{\otimes_{i=1}^N f_{j_i} : \frac{1}{1-T}\left(\Sigma_{i=1}^N k(f_{j_i})^{p_q}\right)^{-T/p_q} \prod_{i=1}^N k(f_{j_i}) \le K \text{ and } \left(\Sigma_{i=1}^N r(f_{j_i})^{p_r}\right)^{\frac{1}{p_r}} \le$$

$$R \text{ where } \{j_1, \dots, j_N\} \subseteq \{1, \dots, M\}\},$$

wherein $T$, with $T < 1$, defines a reduction of a number of basis functions, and $p_q$ and $p_r$ are parameters of selected $p_q$- and $p_r$-norms,

wherein the device is configured to select K and R based on an error behavior of the reduced tensor product basis set $S_{K,R}^{T,p_q,p_r}$.

Here, the first term having the mapping $k$ is similar to the term discussed above, contained in $S_K^{T,p}$, which may be seen as being similar to a Fourier basis, wherein a second term is additionally taken into account. In an example, in the case of two mappings k and r, the idea of constructing an underlying basis set is similar to the construction a smooth partition of unity of the Fourier space is used to decompose the Fourier space in appropriate compactly supported product domains in Fourier space. Then a discrete Fourier basis set is defined on each of these subdomains. Then, on each of these band-limited functions in Fourier space an inverse Fourier transform is applied to define related basis functions in real space, where the mapping k is associated to the respective subdomain in Fourier space and the mapping r is associated to the respective wavevector of the discrete Fourier basis, which then resembles an index associated with the *localization* in real space.

It is understood that aspects of the invention that are explained in conjunction with one of the methods may also be claimed for the corresponding device, and vice versa.

Within the device or method, a reduced representation of the many-particle wavefunction is achieved by limiting the number of many-particle tensor-product basis functions, which are taken into account. This is accomplished by terminating the single-particle functions that are considered by way of the threshold $K \in \mathbb{R}_+$, and by way of the threshold $R \in \mathbb{R}_+$, if applicable. The mapping $k$ is monotonously increasing, and the lowest and first value assigned by $k$ is larger or equal to 1: $k(f_{j_1}) \ge 1$. It is noted that the mapping $k$ may be defined as acting on the function $f$, or as acting directly on the index $j_i$. The same holds for the mapping $r$. This way, the product term exhibits a controlled behavior that ensures that terms of subsequent order make continuously smaller contributions to the approximation of the wavefunction. This way, truncation according to the defined threshold does not lead to unexpected behavior. Terminating the single-particle functions in this way means that high eigenvalues are neglected, as higher correlations between the single-particle functions become less important. The tensor-product (e.g. polynomials) basis that spans the space is thus truncated, as higher order tensors (e.g. higher degree polynomials) become less and less important, due to the smoothness of the solutions.

Within the device or method, $K$ may be selected based on a convergence behavior of the reduced tensor product basis set, $S_K^{T,p}$, or $S_{K,R}^{T,p_q,p_r}$ depending on K. For example, an initial value of $K=K_1$ may be used for a first calculation. The initial value of $K_1$ may for instance be selected and put in by a user. Within the device or method, an initial calculation is carried out for $K=K_1$. The value of $K$ is continuously increased, with e.g. $K=K_2$, $K=K_3$, ... wherein $K_1<K_2<K_3<$... and the results of the various calculations are compared to each other. If a change of the result of the calculations, dependent on $K$, exhibits convergent behavior as $K$ is increased, it may be determined that the method is converging and delivers trustworthy results. $K$ is thus finally chosen such that convergent behavior is present for the selected $K$, as determined by the above-described convergence study. An initial choice may be a low value for $K$, and then $K$ may be continuously increased, such as by a step of 1. Alternatively, $K$ may be increased by multiplying $K$ by a factor, such as by 2. Additionally or alternatively, if an error formula is available, and the asymptotic error behavior is known, a set of a few values of $K$, such as 3 values of $K$, may be sufficient in order to extrapolate the behavior.

For $S_{K,R}^{T,p_q,p_r}$, when the additional parameter $R$ is present, $R$ and $K$ may be selected as $R \propto log_2(K)$. In another example, $R$ and $K$ may be selected as $R \propto K$. In an example, $R$ may be selected as $R = aK^b$, or $R = c \log_d(K)$, wherein $a$ is a factor that may be selected as close to one. Also, the remaining factors may be selected, for instance as $b=1$, $c=1$ and $d=2$, or as different numbers, in particular integers. Note that this depends on the properties of the state functions. E.g. in case of eigenvalues of the discrete spectrum, it is well known, that the corresponding eigenfunctions decay exponentially in space and hence are called bounded states. Moreover, these eigenfunctions are in special Sobolev spaces of dominating mixed smoothness. Here, one would choose, $R = c \log_d(K)$, since the error decay behavior of specific error estimation terms is algebraic with respect to K and exponential with respect to R.

Within the device or method, $M$ may be $M = \infty$. I.e., the set of single particle functions may be infinite. $M$ may be finite, or it may be truncated, as an approximation. In case of a finite $M$, the reduced tensor product basis set, $S_K^{T,p}$, or $S_{K,R}^{T,p_q,p_r}$, does not increase anymore, from a certain $K$ (and $R$) on. In an example, $M$ may be kept infinite, and the truncation is accomplished via truncating $K$ (and $R$).

The additional parameter $T \in \mathbb{R}$, with $T < 1$, defines a reduction of a number of basis functions, which may also be called a "sparsification". The sparsification may be varied within the present method or device. For example, $T$ may be selected as $T = 0$. $T$ may also be selected as $0 < T < 1$. $T$ may also be selected as $\infty < T < 0$. $T$ is thereby chosen larger than $-\infty$ within the present device or method, i.e., $-\infty < T < 1$. The limit $T \rightarrow -\infty$ is excluded according to the presented device or method.

Specifically, for $S_K^{T,p}$ as defined above, for $T = 0$, a special case is achieved, wherein $S_K^{T=0,p} = S_K^{T=0} = S_K$ takes on the following form:

$$S_K := \{\otimes_{i=1}^N f_{j_i} : \prod_{i=1}^N k(f_{j_i}) \leq K \text{ and } \{j_1, ..., j_N\} \subseteq \{1, ..., M\}\}$$

This is for instance a hyperbolic case or a hyperbolic cross, if the single-particle functions $f_j$ form a Fourier basis. For $0 < T < 1$, basis sets are achieved that are more reduced (more sparse) than the case of $S_K^{T=0}$, wherein the special case $T \rightarrow 1$ represents the smallest possible set, which can be interpreted as taking only the one-particle axes, i,e. { $\otimes_{i=1}^N f_{j_i} : \prod_{i=1}^N k(f_{j_i}) \leq K \text{ and} \{j_1, ..., j_N\} \subseteq \{1, ..., M\} \text{ and } (k(f_{j1}), ..., k(f_{jN})) = (1, ..., 1, e, 1, .., 1) \text{ with } e > 1\}$, into account. The special case $T \rightarrow 1$ can be included, according to the presented device or method. For $-\infty < T < 0$, sets are obtained that are larger than the set of $S_K^{T=0,p}$. The limit $T \rightarrow -\infty$ corresponds to the case with no sparsification, which may be represented as

$$F_K^p := \{\otimes_{i=1}^N f_{j_i} : \left(\sum_{i=1}^N k(f_{j_i})^p\right)^{\frac{1}{p}} \leq K \text{ and } \{j_1, ..., j_N\} \subseteq \{1, ..., M\}\} \text{ ,}$$

with $p > 0$ defining a norm of $F_K^p$. Here, again, $p$ is commonly chosen as $p = 1$ which represents the 1-norm. It may for instance also be chosen as $p = 2$ for the Euclidian norm, or as $p = \infty$ for the maximum-norm. $F_K^p$ represents the full tensor product space with respect to $M$ one-particle functions, which may be seen as including all Slater determinants of the FCI approach (in contrast, the present device or method employs only a selection of the Slater Determinants, according to the selected sparsification). This limit is thus typically not envisioned within the current method, as it does not reduce the basis set as envisioned according to the invention. The full tensor product space may serve as a reference for the present device of method. As the full tensor product space is approximated by way of truncating $K$, the basis set increases drastically as $K$ is increased. The effect of the presently presented device and method is the substantially reduced growth rate in the number of qubits required as a function of the number of spin orbitals (or spatial orbitals) involved. I.e. for within the present invention, the reduced tensor product basis set $S_K^{T=0}$ contains $n = O(M\log(M)^{N-1})$ elements, which can be coded with only $\log n$ qubits (here, $\log n$ indicates $\log_2 n$). In contrast, for the full tensor product space, the set includes $O(M^N)$ elements, which results in asymptotically substantially more elements.

For the reduced tensor product basis set $S_K^{T,p}$, the number of orbitals behaves as (assuming that $M$ is infinite):

$$O\left(\log(K \log(K)^{N-1})\right) = O\left(\log(K) + (N-1)\log(\log(K))\right)$$

That is, as $K$ is increased, the cost increases linearly, except for a logarithmic term. In contrast, for the full tensor product space, the set includes $O(M^N)$ elements, which results in asymptotically substantially more elements. The number of orbitals behaves as

$$O\left(log\left(\binom{K}{N}\right)\right) = O\left(N \, log(K)\right)$$

I.e., for the full set, the cost increases exponentially, as $K$ is increased.

It is noted that $N$ is much smaller than $M$ in typical applications.

At the same time, the device and method may also reduce the number of qubits required for a given error tolerance, compared to approaches using the unreduced tensor product space.

Specifically, the present inventors have realized that the findings of Yserentant, H., in *"Regularity and approximability of electronic wave functions"*, Springer 2010, and of Griebel, M., and Hamaekers, J., in *"Tensor product multiscale many-particle spaces with finite-order weights for the electronic Schrödinger equation"*, Zeitschrift für Physikalische Chemie, 2010, 224(3-4), 527-543 suggest that in special cases of $T=0$, the error behavior of $S_K^{T=0} = S_K$ dependent on $K$ may be similar to the case of the full unreduced tensor product basis set. I.e., for those specific cases, the asymptotic error behavior of the reduced tensor product basis set $S_K$ corresponds to that of $F_K^p$, except for a logarithmic term. In the context of the present invention, a further advantage, in addition to the reduced number of qubits required as explained above, may therefore be that, based on the findings for a specific case, the error behavior may be favorable, also for the general cases presented herein.

Accordingly, the error of the present device or method is comparable to the error produced when using the full tensor product space, and truncating it via $K$.

For $S_{K,R}^{T,p_q,p_r}$ as defined above, the special case $T = 0$ takes on the following form:

$$S_{K,R}^{p_r} := \{\otimes_{i=1}^N f_{j_i} : \prod_{i=1}^N k(f_{j_i}) \leq K \text{ and } \left(\sum_{i=1}^N r(f_{j_i})^{p_r}\right)^{\frac{1}{p_r}} \leq R \text{ where } \{j_1, \ldots, j_N\} \subseteq \{1, \ldots, M\}\}$$

The full tensor space in the limit $T \to -\infty$, with no sparsification, which is typically excluded according to the method presented herein, may be represented as:

$$F_{K,R}^{p_q,p_r} := \{\otimes_{i=1}^N f_{j_i} : \left(\sum_{i=1}^N k(f_{j_i})^{p_q}\right)^{\frac{1}{p_q}} \leq K \text{ and } \left(\sum_{i=1}^N r(f_{j_i})^{p_r}\right)^{\frac{1}{p_r}} \leq R \text{ where } \{j_1, \ldots, j_N\} \subseteq \{1, \ldots, M\}\}$$

Compared to the example of $S_K^{T,p}$, using $S_{K,R}^{T,p_q,p_r}$ allows a more sophisticated discretization that may take into account spatial discretization. Nonetheless, the above-described advantages regarding the reduced growth rate apply here in the same manner.

Choosing $R = K$ as a special case, results in having effectively only a single discretization parameter. Using $R = K$ and selecting T=0 it can once again be expected that the asymptotic error behavior of the sparse set is equal to the behavior of the full/unreduced tensor product basis, up to logarithmic terms.

In an example, the set $B$ may be selected as a subset of eigenfunctions of a one-particle Hamilton operator and the mapping $k$ may be chosen as a function that assigns an associated eigenvalue to each single-particle function $f_j$ in the set. The Hamilton operator may be a Schrödinger operator, for example.

Mapping $k$ may be seen as ordering the bases according to their degree of oscillations or smoothness level $s$(as does the wavenumber in the case of a Fourier-basis). Mapping $r$ may be seen as ordering the bases on a given level of smoothness s according to their distance from the origin, wherein the distances to neighboring bases decrease, as the level increases from $s$ to $s$+1. This is analogous to a wavelet having a level/scale-index and a space index.

In an example, within the present device or method, the reduced tensor product basis set $S_K^{T,p}$ or $S_{K,R}^{T,p_q,p_r}$ may be provided to a hardware system in the form of a quantum hardware system or a hybrid-quantum hardware system, the reduced tensor product basis set $S_K^{T,p}$ or $S_{K,R}^{T,p_q,p_r}$ in particular being represented by qubits contained in the hardware system.

For example, the physical system may be simulated on the hardware system, based on the reduced tensor product basis set $S_K^{T,p}$ or $S_{K,R}^{T,p_q,p_r}$, in particular in order to compute a groundstate of the physical system, for determining energy levels or further analysis.

The device may comprise a hardware system in the form of a quantum hardware system or a hybrid-quantum hardware system, wherein the device may be configured to provide the reduced tensor product basis set $S_K^{T,p}$ or $S_{K,R}^{T,p_q,p_r}$ to the hardware system.

The invention shall now be described in an exemplary and non-limiting manner with respect to the appended figures.

Therein,

Fig. 1a illustrates a quantum computing method based on a reduced compact encoding according to parameters k, K, T, p, which method employs quantum hardware;

Fig. 1b illustrates a quantum computing method based on a reduced compact encoding according to parameters k, K, T, p, which method employs hybrid quantum hardware;

Fig. 2a illustrates a quantum computing method based on a reduced compact encoding according to parameters k, r, K, R, T, $p_q$, $p_r$, which method employs quantum hardware; and

Fig. 2b illustrates a quantum computing method based on a reduced compact encoding according to parameters k, r, K, R, T, $p_q$, $p_r$, which method employs hybrid quantum hardware.

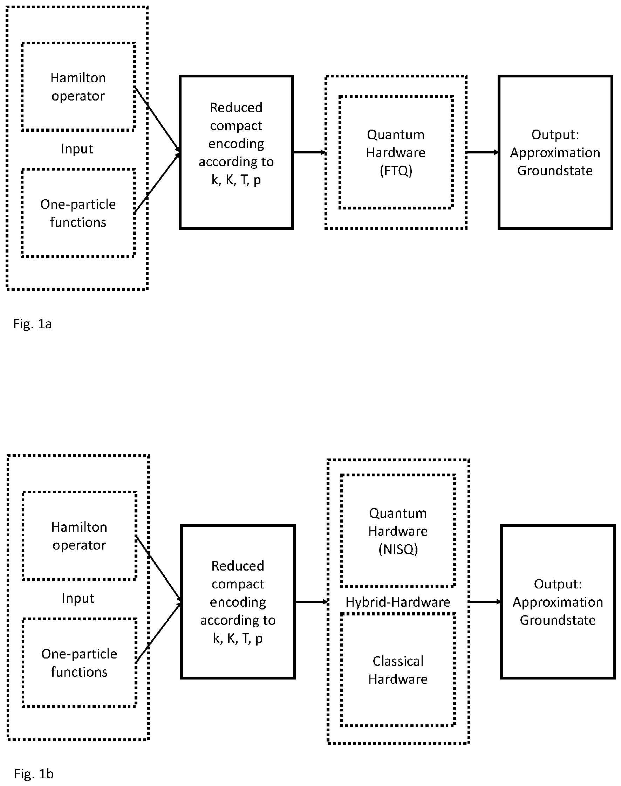

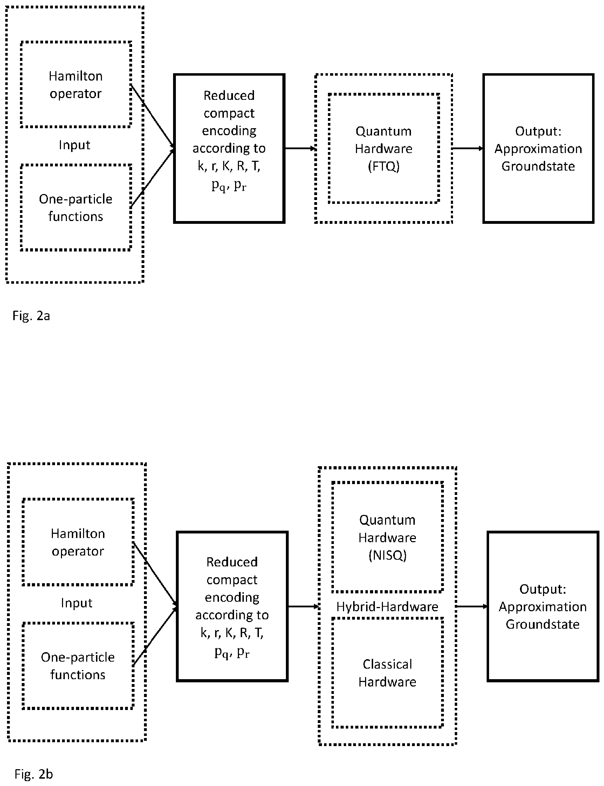

With reference to all Figs. 1a-2b, a quantum computing method is shown, which employs a quantum computing device. The method includes, in each case, a sparse encoding, as will be described here below. In an example, a groundstate of a physical system containing N particles is to be approximated. For example, this may be the groundstate of a molecule, whose Hamilton operator has fermionic eigenfunctions. The method is however not limited to such Hamiltonians or eigenfunctions, and it may also be used for bosonic systems, in particular.

For example, a Hamilton operator and a set of one-particle functions are provided as an input to the method. In particular, the Hamilton operator is chosen as a one-particle Schrödinger operator, and the one-particle functions are chosen as a subset $B$ of the eigenfunctions $f_j$ of the one-particle Schrödinger operator, defined as $B := \{f_1, f_2, ..., f_M\}$, which form in particular an $L_2$-orthonormal basis of the corresponding one-particle Hilbert space, and to which an order can be assigned. Therein, $M$ may be kept infinite, $M = \infty$.

Turning to Figures 1a and 1b, within the method, a reduced tensor product basis set $S_K^{T,p}$ of the single-particle functions $f_j$ is selected as

$$S_K^{T,p} := \left\{ \otimes_{i=1}^N f_{j_i} : \frac{1}{1-T}\left(\sum_{i=1}^N k\left(f_{j_i}\right)^p\right)^{-T/p} \left(\prod_{i=1}^N k\left(f_{j_i}\right)\right) \leq K \ and \ \{j_1, ..., j_N\} \subseteq \{1, ..., M\} \right\}$$

To this end, a monotonously increasing mapping $k$ is defined, which assigns a positive number to each single-particle function $f_l$. In the example, $k$ is a mapping that assigns the associated eigenvalue to each one-particle basis function. Moreover, the parameter $K$ is selected based on an error behavior of the reduced tensor product basis set $S_K^{T,p}$, and the parameter $T$ is selected with $-\infty < T < 1$. $T$ defines a reduction or sparsification of the number of basis functions. In the example, $T$ is selected as $T = 0$, which corresponds to the hyperbolic set $S_L^{T=0,p}$, but $0 < T < 1$, or $-\infty < T < 0$ are also possible options. For example, within the method, convergence studies are carried out, in order to verify that for $T = 0$, $S_K^{T,p}$ exhibits converging behavior as $K$ is increased. A value of $K$ is subsequently selected that is in a range, in which $S_K^{T,p}$ is convergent.

The reduced tensor product basis set $S_K^{T,p}$, including the defined mapping $k$ and the determined values of $T$ and $K$ is provided to a hardware system. With reference to Fig. 1a, this may be a Fault-Tolerant Qubits (FTQ) Quantum Hardware such as Quantum Phase Estimation (QPE) or a device employing Hamilton Simulation methods. With reference to Fig. 1b, this may also be a hybrid quantum hardware, such as a Noisy Intermediate Scale Qubits (NISQ) device, e.g. incorporating a Hybrid Variational Quantum Eigensolver (VQE), which may include a classical hardware component. The reduced tensor product basis set $S_K^{T,p}$ is then represented by qubits contained in the respective hardware system. These considerations concerning the hardware systems also apply to the cases of Figures 2a and 2b, mutatis mutandis.

By way of example, in the case of an electronic system with $N$ particles, comprising $N_u$ spin-up and $N_d$ spin-down electrons, with $N = N_u + N_d$, for $T = 0$, the reduced sets can be written as

$$S_K^{(N_u,N_d)} := \{(\wedge_{i=1}^{N_u} f_{j_i}^{(u)}) \otimes (\wedge_{i=1}^{N_d} f_{n_i}^{(d)}) : (\prod_{i=1}^{N_u} k\left(f_{j_i}^{(u)}\right) + \prod_{i=1}^{N_d} k(f_{n_i}^{(d)})) \leq K \ and \ \{j_1, \ldots, j_{N_u}\} \subseteq$$

$$\{1, \ldots, M\} \ and \ \{n_1, \ldots, n_{N_d}\} \subseteq \{1, \ldots, M\}\},$$

where $\Lambda$ is the anti-symmetric tensor product (the definition of the other sets, such as the ones dependent on $T$, or the full set, can be modified analogously), and with the spin-up one-particle basis functions and the spin-down one-particle functions, respectively, being given by the sets:

$$B^{(u)} = \left\{f_j^{(u)} \mid j \leq M\right\}$$

and

$$B^{(d)} = \left\{f_n^{(d)} \mid n \leq M\right\}$$

The qubits occupied by this representation are significantly reduced, compared to a full representation, corresponding to $\rightarrow -\infty$, with no sparsification, which may be represented as

$$F_K^p := \{\otimes_{i=1}^N f_{j_i} : \left(\sum_{i=1}^N k(f_{j_i})^p\right)^{\frac{1}{p}} \leq K \ and \ \{j_1, \ldots, j_N\} \subseteq \{1, \ldots, M\}\}$$

or, in the case of fermions, as:

$$F_K^{p(N_u,N_d)} := \{(\wedge_{i=1}^{N_u} f_{j_i}^{(u)}) \otimes (\wedge_{i=1}^{N_d} f_{n_i}^{(d)}) : \left(\sum_{i=1}^{N_u} k\left(f_{j_i}^{(u)}\right)^p + \sum_{i=1}^{N_d} k\left(f_{n_i}^{(d)}\right)^p\right)^{\frac{1}{p}} \leq$$

$$K \ and \ \{j_1, \ldots, j_{N_u}\} \subseteq \{1, \ldots, M\} \ and \ \{n_1, \ldots, n_{N_d}\} \subseteq \{1, \ldots, M\}\},$$

at the same order of accuracy, a reduced growth rate in the number of qubits required as a function of the number of spin orbitals (or spatial orbitals) involved. I.e. the reduced tensor product basis set $S_K^{T=0}$ with sparsification behaves as

$$O\big(log(K \ log(K)^{N-1})\big) = O\left(\log(K) + (N-1)log\big(log(K)\big)\right)$$

vs. the full set, which behaves as

$$O\big(\log\big(\binom{K}{N}\big)\big) = O\big(N \ log(K)\big)$$

In case of a many-electron state with spin-up and spin-down electrons as described above, we get analogously, for the reduced tensor product basis set:

$$O\big(log(K^2 \ log(K)^{N_u-1} log(K)^{N_d-1})\big) = O\left(2\log(K) + (N_u - 1)log\big(log(K)\big) + (N_d - 1)log\big(log(K)\big)\right),$$

as compared to:

$$O\big(\log\big(\binom{K}{N_u}\binom{K}{N_d}\big)\big) = O\big(N_u \ log(K) + N_d \ log(K)\big), \text{ for the full basis set}$$

Specifically, considering as an example the calculation of the FeMoco cofactor of the Nitrogenase enzyme which involves $N = 54$ electrons. For the case with equal spin-up and spin-down electrons, i.e. $N_u = N_d = 27$, one would take for example $K = M = 108$ Gaussian spin-orbitals as single-particle functions. This leads to $54\lceil\log 108\rceil = 378$ qubits for conventional encoding, and only = 157 qubits for the sparse encoding described herein, which relies on the reduced tensor product basis set. Moreover, in case of using a plane wave like basis set one could assume to need $K = M = 10^6$ spin-orbitals, which would result in $54\lceil\log(10^6)\rceil = 1080$ qubits, compared to $\lceil\log(10^{12}\log(10^6)^{2(27-1)})\rceil = 265$ qubits in the introduced sparse encoding case.

Accordingly, the problem may be encoded onto the appropriate amount of qubits of the hardware system, and the underlying physical system may thus be simulated on the hardware system, based on the reduced tensor product basis set $S_K^{T,p}$. As shown for instance in Figures 1a and 1b, the hardware may provide an approximation of the groundstate of the physical system as an output. The invention can thus be used to reduce the number of qubits required to represent multi-particle wave functions with respect to Hamiltonian operators for molecules. In particular, many new problems in the field of chemistry and physics can thus be simulated on quantum computers with this substantially reduced qubit numbers due to our encoding. This potentially accelerates the development of energy materials and active pharmaceutical ingredients in particular.

Turning to Figures 2a and 2b, in another example, a Hamilton operator and a set of one-particle functions are provided as an input to the method. In particular, the one-particle functions are chosen as a subset $B$ of single-particle functions $f_j$, defined as $B := \{f_1, f_2, ..., f_M\}$, which form in particular an $L_2$-orthonormal basis of the corresponding one-particle Hilbert space, and to which an order can be assigned. In this example, a reduced tensor product basis set $S_{K,R}^{T,p_q,p_r}$ of the single-particle functions is selected as

$$S_{K,R}^{T,p_q,p_r} := \{\otimes_{i=1}^N f_{j_i} : \frac{1}{1-T}\left(\sum_{i=1}^N k(f_{j_i})^{p_q}\right)^{-T/p_q} \prod_{i=1}^N k(f_{j_i}) \le K \text{ and } \left(\sum_{i=1}^N r(f_{j_i})^{p_r}\right)^{\frac{1}{p_r}}$$

$$\le R \text{ where } \{j_1, ..., j_N\} \subseteq \{1, ..., M\}\}$$

and monotonously increasing mappings k and rare defined, which assign a positive number to each single-particle function $f_j$. Moreover, the parameters $K$ and $R$ are selected based on an error behavior of the reduced tensor product basis set $S_{K,R}^{T,p_q,p_r}$, and the parameter $T \in \mathbb{R}$ is selected with $-\infty < T < 1$.

The reduced tensor product basis set $S_{K,R}^{T,p_q,p_r}$, including the defined mappings k and r and the determined values of $T$ and $K$ and $R$ is provided to a hardware system, as shown in Fig. 2a or Fig. 2b, and subsequently the corresponding calculations are carried out using the hardware system.

For example, if the described system is a fermionic system comprising a total of N particles, such as electrons, with $N = N_u + N_d$, this may be written as follows

$$S_{K,R}^{(N_u,N_d),T,p_q,p_r} := \{(\wedge_{i=1}^{N_u} f_{j_i}^{(u)}) \otimes (\wedge_{i=1}^{N_d} f_{n_i}^{(d)})$$

$$: \frac{1}{1-T}\left(\prod_{i=1}^{N_u} k^{(u)}\left(f_{j_i}^{(u)}\right)\right.$$

$$\left. + \prod_{i=1}^{N_d} k^{(d)}\left(f_{n_i}^{(d)}\right)\right)\left(\sum_{i=1}^{N_u} k^{(u)}\left(f_{j_i}^{(u)}\right)^{p_q} + \sum_{i=1}^{N_d} k^{(d)}\left(f_{n_i}^{(d)}\right)^{p_q}\right)^{-\frac{T}{p_q}}$$

$$\le K \text{ and } \left(\sum_{i=1}^{N_u} r^{(u)}\left(f_{j_i}^{(u)}\right)^{p_r} + \sum_{i=1}^{N_d} r^{(d)}\left(f_{n_i}^{(d)}\right)^{p_r}\right)^{\frac{1}{p_r}} \le R$$

and $\{j_1, ..., j_{Nu}\} \subseteq \{1, ..., M\}$ and $\{n_1, ..., n_{Nd}\} \subseteq \{1, ..., M\}\}$,
with the spin-up one-particle basis functions and the spin-down one-particle functions, respectively, being given by the sets:

$$B^{(u)} = \left\{ f_j^{(u)} \mid j \leq M \right\}$$

and

$$B^{(d)} = \left\{ f_n^{(d)} \mid n \leq M \right\}$$

For the special case $T = 0$, this takes on the form:

$$S_{K,R}^{(N_u,N_d),p_r} := \{(\wedge_{i=1}^{N_u} f_{j_i}^{(u)}) \otimes (\wedge_{i=1}^{N_d} f_{n_i}^{(d)}) : \left( \prod_{i=1}^{N_u} k^{(u)}\left(f_{j_i}^{(u)}\right) + \prod_{i=1}^{N_d} k^{(d)}\left(f_{n_i}^{(d)}\right) \right)$$

$$\leq K \text{ and } \left( \sum_{i=1}^{N_u} r^{(u)} \left(f_{j_i}^{(u)}\right)^{p_r} + \sum_{i=1}^{N_d} r^{(d)} \left(f_{n_i}^{(d)}\right)^{p_r} \right)^{\frac{1}{p_r}} \leq R$$

$$\text{and } \{j_1, \dots, j_{N_u}\} \subseteq \{1, \dots, M\} \text{ and } \{n_1, \dots, n_{N_d}\} \subseteq \{1, \dots, M\} \}$$

**Claims**

1. A method for performing a quantum computation,

   the method including a sparse encoding, wherein, for a number $N$ of particles in a physical system, and a size of a basis set, $M \in \mathbb{N} \cup \{\infty\}$, a set $B$ of $M$ single-particle functions $f_j$, with each function $f_j$ being a function from a one particle space to $\mathbb{C}$, is defined as $B := \{f_1, f_2, \dots, f_M\}$, and a monotonously increasing mapping $k$ is defined, which assigns a real positive number to each single-particle function $ft$, wherein, for a parameter $K \in \mathbb{R}_+$, a reduced tensor product basis set $S_K^{T,p}$ of the single-particle functions $f_j$ is selected as

   $$S_K^{T,p} := \{\otimes_{i=1}^N f_{j_i} : \frac{1}{1-T}\left(\sum_{i=1}^N k\left(f_{j_i}\right)^p\right)^{-T/p} (\prod_{i=1}^N k\left(f_{j_i}\right)) \leq K \text{ and } \{j_1, \dots, j_N\} \subseteq \{1, \dots, M\}\},$$

   wherein $T \in \mathbb{R}$, with $T < 1$, defines a reduction in a number of basis functions, $p$ is a parameter of a selected $p$-norm, and $K$ is selected based on an error behavior of the reduced tensor product basis set $S_K^{T,p}$.

2. A method for performing a quantum computation,

   the method including a sparse encoding, wherein, for a number $N$ of particles in a physical system, and a size of a basis set, $M \in \mathbb{N} \cup \{\infty\}$, a set $B$ of $M$ single-particle functions $f_j$, with each function $f_j$ being a function from a one particle space to $\mathbb{C}$, is defined as $B := \{f_1, f_2, \dots, f_M\}$, and two monotonously increasing mappings $k$ and $r$ are defined, which assign a real positive number to each single-particle function $ft$,

   wherein, for a parameter $K \in \mathbb{R}_+$ and a parameter $R \in \mathbb{R}_+$, a reduced tensor product basis set $S_{K,R}^{T,p_q,p_r}$ of the single-particle functions $f_j$ is selected as

   $$S_{K,R}^{T,p_q,p_r} := \{\otimes_{i=1}^N f_{j_i} : \frac{1}{1-T}\left(\sum_{i=1}^N k\left(f_{j_i}\right)^{p_q}\right)^{-T/p_q} \prod_{i=1}^N k\left(f_{j_i}\right) \leq$$

   $$K \text{ and } \left(\sum_{i=1}^N r\left(f_{j_i}\right)^{p_r}\right)^{\frac{1}{p_r}} \leq R \text{ where } \{j_1, \dots, j_N\} \subseteq \{1, \dots, M\}\},$$

wherein $T \in \mathbb{R}$, with $T < 1$, defines a reduction in a number of basis functions, $p_q$ and $p_r$ are parameters of selected $p_q$-norms and $p_r$-norms and $K$ and $R$ are selected based on an error behavior of the reduced tensor product basis set $S_{K,R}^{T,p_q,p_r}$.

3. The method of claim 2, wherein $R$ and $K$ are selected as $R \propto log_2(K)$.

4. The method of claim 2, wherein $R$ and $K$ are selected as $R \propto K$.

5. The method of any of the preceding claims, wherein $K$ is selected based on a convergence behavior of the reduced tensor product basis set, depending on $K$.

6. The method of any of claims 1-5, wherein $T$ is selected as $T = 0$.

7. The method of any of claims 1-5, wherein $T$ is selected as $0 < T < 1$.

8. The method of any of claims 1-5, wherein $T$ is selected as $-\infty < T < 0$.

9. The method of any of the preceding claims, wherein the set $B$ is selected as a subset of eigenfunctions of a one-particle Hamilton operator, and the mapping $k$ assigns an associated eigenvalue to each single-particle function in the set.

10. The method of any of the preceding claims, wherein the reduced tensor product basis set, $S_K^{T,p}$ or $S_{K,R}^{T,p_q,p_r}$, is provided to a hardware system in the form of a quantum hardware system or a hybrid-quantum hardware system, the reduced tensor product basis set in particular being represented by qubits contained in the hardware system.

11. The method of claim 10, wherein the physical system is simulated on the hardware system, based on the reduced tensor product basis set, $S_K^{T,p}$ or $S_{K,R}^{T,p_q,p_r}$, in particular in order to compute a groundstate of the physical system.

12. The method of any of the preceding claims, wherein $M = \infty$.

13. A device for performing a quantum computation, the device comprising an encoder for sparse encoding, the encoder being configured to produce a reduced tensor product basis set, $S_K^{T,p}$, for a physical system,

wherein, for a number $N$ of particles in the physical system, and a size of a basis set, $M \in \mathbb{N} \cup \{\infty\}$, a set $B$ of $M$ single-particle functions $f_j$, with each function $f_j$ being a function from a one particle space to $\mathbb{C}$, is defined as $B :=\{f_1, f_2, \ldots, f_M\}$, and a monotonously increasing mapping $k$ is defined, which assigns a real positive number to each single-particle function $ft$, the device is configured to select the reduced tensor product basis set $S_K^{T,p}$ of the single-particle functions $f_j$ as

$$S_K^{T,p} := \{\otimes_{i=1}^{N} f_{j_i} : \frac{1}{1-T}\left(\Sigma_{i=1}^{N} k\left(f_{j_i}\right)^p\right)^{-T/p} (\prod_{i=1}^{N} k\left(f_{j_i}\right)) \le K \ and \ \{j_1, \ldots, j_N\} \subseteq \{1, \ldots, M\}\},$$

wherein $T \in \mathbb{R}$, with $T < 1$, defines a reduction of a number of basis functions, $p$ is a parameter of a selected $p$-norm, and wherein the device is configured to select $K$ based on an error behavior of the reduced tensor product basis set $S_K^{T,p}$.

14. A device for performing a quantum computation, the device comprising an encoder for sparse encoding, the encoder being configured to produce a reduced tensor product basis set, $S_{K,R}^{T,p_q,p_r}$, for a physical system,

wherein, for a number $N$ of particles in a physical system, and a size of a basis set, $M \in \mathbb{N} \cup \{\infty\}$, a set $B$ of $M$ single-particle functions $f_j$, with each function $f_j$ being a function from a one particle space to $\mathbb{C}$, is defined as $B := \{f_1, f_2, ..., f_M\}$, and two monotonously increasing mappings $k$ and $r$ are defined, which assign a real positive number to each single-particle function $f_j$,

the device is configured to select the reduced tensor product basis set $S_{K,R}^{T,p_q,p_r}$ of the single-particle functions $f_j$ as

$$S_{K,R}^{T,p_q,p_r} := \{\otimes_{i=1}^{N} f_{j_i} : \frac{1}{1-T}\left(\Sigma_{i=1}^{N} k\left(f_{j_i}\right)^{p_q}\right)^{-T/p_q} \prod_{i=1}^{N} k\left(f_{j_i}\right) \leq$$

$$K \ and \ \left(\Sigma_{i=1}^{N} r\left(f_{j_i}\right)^{p_r}\right)^{\frac{1}{p_r}} \leq R \ where \ \{j_1, ..., j_N\} \subseteq \{1, ..., M\}\},$$

wherein $T \in \mathbb{R}$, with $T < 1$, defines a reduction of a number of basis functions, $p_q$ and $p_r$ are parameters of selected $p_q$-norms and $p_r$-norms,
wherein the device is configured to select $K$ and $R$ based on an error behavior of the reduced tensor product basis set $S_{K,R}^{T,p_q,p_r}$.

15. The device of claim 13 or 14, further comprising a hardware system in the form of a quantum hardware system or a hybrid-quantum hardware system, the device being configured to provide the reduced tensor product basis set to the hardware system.

Fig. 1a

Fig. 1b

Fig. 2a

Fig. 2b

| | Europäisches Patentamt European Patent Office Office européen des brevets | **EUROPEAN SEARCH REPORT** | **Application Number** EP 24 20 5669 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILLIAM J HUGGINS ET AL: "Efficient state preparation for the quantum simulation of molecules in first quantization", ARXIV.ORG, CORNELL UNIVERSITY LIBRARY, 201 OLIN LIBRARY CORNELL UNIVERSITY ITHACA, NY 14853, 28 June 2024 (2024-06-28), XP091803852, * page 1 - page 17, left-hand column, paragraph 1 * * Appendix G * ----- | 1-15 | INV. G06N10/60 ADD. G06N10/20 |
| A | Chen Ahai ET AL: "ElVibRot-MPI: parallel quantum dynamics with Smolyak algorithm for general molecular simulation", , 3 December 2021 (2021-12-03), XP093254403, DOI: https://doi.org/10.48550/arXiv.2111.13655 Retrieved from the Internet: URL:https://arxiv.org/pdf/2111.13655 [retrieved on 2025-02-26] * page 1 - page 17 * ----- | 1-15 | |
| A | JULES TILLY ET AL: "The Variational Quantum Eigensolver: a review of methods and best practices", ARXIV.ORG, CORNELL UNIVERSITY LIBRARY, 201 OLIN LIBRARY CORNELL UNIVERSITY ITHACA, NY 14853, 12 June 2022 (2022-06-12), XP091244965, * page 1 - page 132 * ----- | 1-15 | TECHNICAL FIELDS SEARCHED (IPC) G06N |

The present search report has been drawn up for all claims

| Place of search | Date of completion of the search | Examiner |
|---|---|---|
| The Hague | 27 February 2025 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4290421 A1
- US 20240071576 A1
- US 2023206100 A1
- US 2023016119 A1
- WO 2021203202 A1
- US 2023385681 A1
- US 11735291 B2